# EUROPEAN PATENT APPLICATION

(11) **EP 4 471 468 A1**
(43) Date of publication of application: **04.12.2024**
(21) Application number: 23746491.2
(22) Date of filing: 30.01.2023
(51) Int. Cl.: G02B 6/00, G02B 27/01

(54) **OPTICAL COMBINER AND DISPLAY DEVICE**

(30) Priority: 30.01.2022 CN 202210114527
(71) Applicant: Zhuhai Mojie Technology Co., Ltd., Zhuhai, Guangdong 519085 (CN)
(72) Inventor: GUAN, Jian, Zhuhai, Guangdong 519085 (CN); ZHOU, Xing, Zhuhai, Guangdong 519085 (CN); LAN, Fuyang, Zhuhai, Guangdong 519085 (CN); XU, Song, Zhuhai, Guangdong 519085 (CN); ZHAO, Jin, Zhuhai, Guangdong 519085 (CN)
(74) Representative: Agca Kizil, Tugce
(86) International application number: PCT/CN2023/073875
(87) International publication number: WO 2023/143614

(57) **Abstract**

An optical combiner and a display device are provided. The optical combiner includes a light-transmitting structure and a waveguide structure in the light-transmitting structure. The waveguide structure includes a first dielectric layer, a waveguide plate, and a second dielectric layer arranged in sequence. The waveguide plate includes a coupling-out region, wherein the refractive index of the first dielectric layer and the refractive index of the second dielectric layer are both less than the refractive index of the waveguide plate. Since the refractive index of the first dielectric layer and the refractive index of the second dielectric layer are both less than the refractive index of the waveguide plate, light beams propagating in the waveguide plate undergo totally reflection during propagation and cannot be refracted into the first dielectric layer and the second dielectric layer.

## Description

The present disclosure is a continuation of International Patent Application No. PCT/CN2023/073875 filed on January 30, 2023, which claims priority of the Chinese Patent application No. 202210114527.1 entitled "OPTICAL COMBINER AND DISPLAY DEVICE" filed on January 30, 2022, the entire contents of which are incorporated herein by reference.

### Technical Field

The present disclosure relates to the field of near-eye display technology, and in particular to an optical combiner and a display device.

### Background Art

An optical combiner is a device that combines the natural light of a real environment and a signal light that forms an image to be displayed together and transmits the combined lights to human eyes, and is widely used as a display of an augmented reality (AR) near-eye display device. A projection optical machine projects a signal beam that is transmitted in a fixed direction by the optical combiner toward the human eyes, so that the human eyes may see the image to be displayed. Further, since the optical combiner has excellent light transmitting property for the natural light of the real environment, the human eyes can clearly see the real environment behind the optical combiner, so the human eyes may eventually see a combination of the image to be displayed with the real environment.

An optical waveguide has advantages of reduced thickness, reduced weight, and being easy to manufacture and has become a preferred solution for the optical combiner. The optical waveguide is a device that confines a signal beam in the interior thereof and allows the signal light to transmit in a specific direction. Further, the optical waveguide has an excellent light transmitting property for the natural light of the real environment.

In the existing technology, to broaden the application scenario of an optical waveguide based optical combiner, an optical device is arranged outside of the waveguide plate, such as a refractive lens, and after the waveguide plate is disposed in the optical device, the signal light beam confined in the waveguide plate may leak out of the optical device, making the waveguide plate incapable of completely confining the signal beam, resulting in a poor displaying effect or failure of displaying for the image to be displayed of the optical combiner.

Therefore, the existing technology needs to be improved.

### Summary of the Invention

The technical problem to be solved by the present disclosure is, in view of the above-mentioned deficiencies in the related art, to provide an optical combiner and display device, aiming to solve the problem in the related art where light leakage occurs after setting a waveguide sheet inside an optical device, resulting in poor display effect or inability to normally display the image to be displayed by the optical combiner.

The technical solution adopted by the present disclosure to solve the technical problem is as follows.

An optical combiner, comprising:
- a light-transmitting structure; and
- a waveguide structure arranged in an interior of the light-transmitting structure, the waveguide structure comprising a first dielectric layer, a waveguide plate, and a second dielectric layer that are arranged in sequence, each layer of waveguide plate comprising one or more coupling-out regions;
- wherein each of a refractive index of the first dielectric layer and a refractive index of the second dielectric layer is less than a refractive index of the waveguide plate.

The optical combiner, wherein the light-transmitting structure comprises a refractive structure or a blank structure; a refractive power of the refractive structure is greater than or equal to a preset positive threshold value, or is less than or equal to a preset negative threshold value, and a refractive power of the blank structure is less than the preset positive threshold value and greater than the preset negative threshold value.

The optical combiner, wherein the waveguide plate comprises one or more coupling-in regions;
- wherein light incident to the coupling-in region transmits through the deflecting region to propagate to the coupling-out region, the number of the deflecting regions being equal to or greater than the number of the coupling-out regions; and/or
- wherein light incident to the coupling-in region in the same direction transmits in the waveguide to the coupling-out region, and light emerging from the coupling-out region is in the same direction; and/or
- wherein the one or more coupling-out regions comprise two coupling-out regions, and the two coupling-out regions are respectively located at two sides of the coupling-in region.

The optical combiner, wherein the light-transmitting structure comprises a first light-transmitting portion and a second light-transmitting portion, the first light-transmitting portion and the second light-transmitting portion being respectively located at two opposite sides of the waveguide plate;
- wherein the first light-transmitting portion or the second light-transmitting portion is provided with a straight portion, and the straight portion is set at a location corresponding to the coupling-in region, the straight portion having a refractive power that is zero.

The optical combiner, wherein the first light-transmitting portion includes a convex light-transmitting portion, a concave light-transmitting portion, or a light-transmitting portion with uniform thickness; and/or
- wherein the second light-transmitting portion includes a convex light-transmitting portion, a concave light-transmitting portion, or a light-transmitting portion with uniform thickness.

The optical combiner, wherein the waveguide plate is a planar waveguide plate or a curved waveguide plate; and/or
- wherein the waveguide plate comprises at least two layers, the at least two waveguide plates are overlapped in sequence, a third dielectric layer being arranged between each adjacent waveguide plates; and/or
- wherein the first dielectric layer or the second dielectric layer comprises an adhesive layer connected to the waveguide plate, a refractive index of the adhesive layer being less than the refractive index of the waveguide plate.

The optical combiner, wherein the first dielectric layer or the second dielectric layer further comprises a protective layer arranged on one side of the adhesive layer that is opposite to the waveguide plate;
- wherein the adhesive layer is laid to completely cover the protective layer; or
- the adhesive layer comprises:
- a connecting portion having two sides that are respectively connected to the waveguide plate and the protective layer; and
- an air section located between the waveguide plate and the protective layer.

The optical combiner, wherein the waveguide plate comprises multiple layers, and the first dielectric layer and the second dielectric layer are respectively arranged on outermost of the waveguide plates.

A display device, comprising the above optical combiner.

A method for manufacturing the optical combiner, comprising:
- providing a mold assembly and a waveguide structure, wherein the mold assembly comprises a first mold member and a second mold member, the first mold member and the second mold member being connected to form a receiving space, the first mold member and/or the second mold member being provided with a supporting structure, the supporting structure configured for placement of the waveguide structure thereon; and the waveguide structure comprises a first dielectric layer, a waveguide plate, and a second dielectric layer that are arranged in sequence; the waveguide plate comprises a coupling-out region; each of a refractive index of the first dielectric layer and a refractive index of the second dielectric layer being less than a refractive index of the waveguide plate;
- placing the waveguide structure on the supporting structure in the receiving space; and
- injecting a light-transmitting material into the receiving space in order to form the light-transmitting structure to then obtain the optical combiner.

Beneficial effects: Since the refractive indices of the first dielectric layer and the second dielectric layer are both less than the refractive index of the waveguide plate, the light beams propagating within the waveguide plate undergoes total internal reflection during propagation and cannot refract into the first dielectric layer and the second dielectric layer, thus avoiding light leakage issues and ensuring the display effect of the image to be displayed by the optical combiner.

### Brief Description of the Drawings

The technical solutions of the present invention are further described below in connection with the accompanying drawings and embodiments.
FIG. 1 is a schematic diagram illustrating an optical combiner according to one embodiment of the present disclosure.
FIG. 2 is a schematic diagram illustrating another optical combiner according to one embodiment of the present disclosure.
FIG. 3 is a schematic diagram illustrating another optical combiner according to one embodiment of the present disclosure.
FIG. 4 is a schematic diagram illustrating a waveguide plate according to one embodiment of the present disclosure.
FIG. 5 is a schematic diagram illustrating another waveguide plate according to one embodiment of the present disclosure.
FIG. 6 is a schematic diagram illustrating still another waveguide plate according to one embodiment of the present disclosure.
FIG. 7 is a schematic diagram illustrating an optical combiner including a waveguide plate having multiple layers according to one embodiment of the present disclosure.
FIG. 8 is a schematic diagram illustrating another optical combiner including a waveguide plate having multiple layers according to one embodiment of the present disclosure.
FIG. 9 is a schematic diagram illustrating a waveguide plate including two coupling-out regions according to one embodiment of the present disclosure.
FIG. 10 is a schematic diagram illustrating a waveguide plate including two coupling-out regions and two deflecting regions according to one embodiment of the present disclosure.
FIG. 11 is an exploded diagram illustrating a mold assembly according to one embodiment of the present disclosure.
FIG. 12 is an assembled diagram illustrating the mold assembly and the waveguide structure according to one embodiment of the present disclosure.
FIG. 13 is a schematic diagram illustrating injecting a light-transmitting material into the mold assembly according to one embodiment of the present disclosure.
FIG. 14 is an exploded diagram illustrating another mold assembly according to one embodiment of the present disclosure.
FIG. 15 is an assembled diagram illustrating the another mold assembly and the waveguide structure according to one embodiment of the present disclosure.
FIG. 16 is a schematic diagram illustrating injecting a light-transmitting material into the another mold assembly according to one embodiment of the present disclosure.
FIG. 17 is a top plan diagram illustrating a second mold member according to one embodiment of the present disclosure.
FIG. 18 is a schematic diagram illustrating another optical combiner according to one embodiment of the present disclosure.
FIG. 19 is a schematic diagram illustrating still another optical combiner according to one embodiment of the present disclosure.

### List of reference numerals:

1 - waveguide structure, 10 - waveguide plate, 20 - coupling-out region, 30a - first dielectric layer, 30b - second dielectric layer, 30c - third dielectric layer, 31 - adhesive layer, 311 - connecting portion, 312 - air section, 32 - protective layer, 40 - light-transmitting structure, 41 - first light-transmitting portion, 42 - second light-transmitting portion, 43 - through hole, 50 - coupling-in region, 60 - deflecting region, 70 - mold assembly, 71 - first mold member, 711 - supporting structure, 72 - second mold member, 721 - protruding portion.

### Detailed Description of Embodiments

To make the objectives, technical solutions, and advantages of the present disclosure clearer, a detailed description of the present disclosure will be further provided below with reference to the accompanying drawings and embodiments. It will be appreciated that the embodiments described herein are provided for illustrating the present disclosure only, and are not intended to limit the present disclosure.

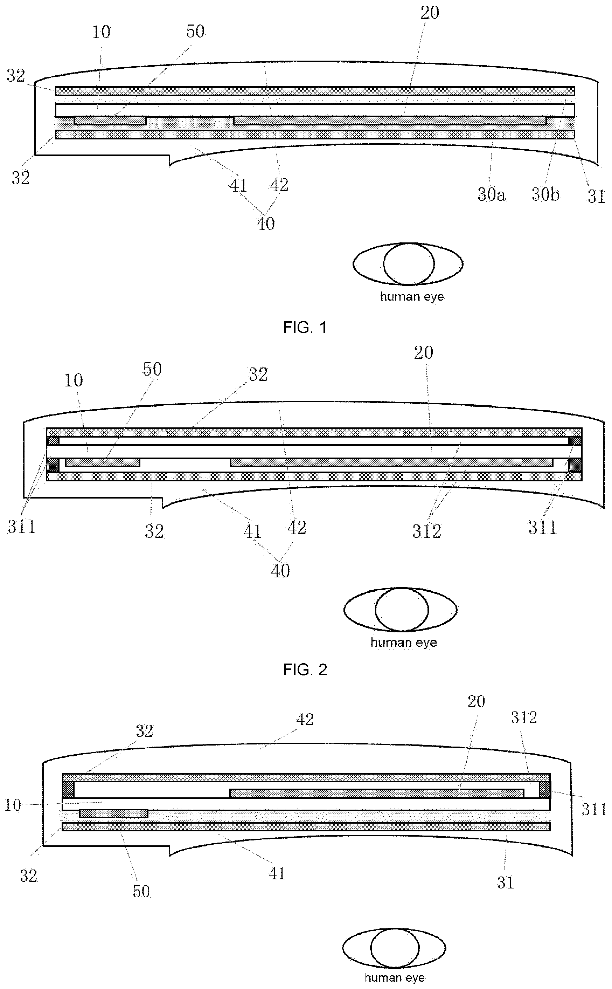

Referring to FIGS. 1-19, the present disclosure provides some embodiments of an optical combiner.

As shown in FIGS. 1-3 and 18 and 19, the optical combiner according to the present disclosure includes a light-transmitting structure 40, and a waveguide structure 1 arranged in an interior of the light-transmitting structure 40. The waveguide structure 1 includes a first dielectric layer 30a, a waveguide plate 10, and a second dielectric layer 30b, which are arranged in sequence. The waveguide plate 10 includes one or more coupling-out regions 20. Each of a refractive index of the first dielectric layer 30a and a refractive index of the second dielectric layer 30b is less than a refractive index of the waveguide plate 10.

It is worth noting that the waveguide plate 10 refers to a structure that enables a light beam to propagate in an interior thereof, which can confine the signal light beam in the interior of the waveguide plate 10, and allows the signal light to transmit in a specific direction. The coupling-out region 20 refers to a region where a light beam is coupled out of the waveguide plate 10. The dielectric layer refers to a structure formed of a dielectric material having a predetermined refractive index. The light-transmitting structure 40 refers to a structure through which a light beam is transmittable.

For the arrangement of the waveguide plate 10 in the interior of the light-transmitting structure 40, if the waveguide plate 10 is directly embedded in the light-transmitting structure 40, a light beam propagating in the interior of the waveguide plate 10 may emerge from an junction between the waveguide plate 10 and the light-transmitting structure 40, such emerging light may influence light emerging from the coupling-out region 20, making the light emerging from the coupling-out region 20 disordering, resulting in a poor displaying effect or inability of normal displaying for an image to be displayed.

In the present disclosure, with the first dielectric layer 30a and the second dielectric layer 30b arranged between the waveguide plate 10 and the light-transmitting structure 40, since each of the refractive index of the first dielectric layer 30a and the refractive index of the second dielectric layer 30b is less than the refractive index of the waveguide plate 10, a light beam propagating in the waveguide plate 10 undergoes a total internal reflection during the propagation thereof, and is not allowed to refract into the first dielectric layer 30a and the second dielectric layer 30b and, as such, there will be no light leaking problem. The light beam propagating in the waveguide plate 10 only emerges outward when propagating to the coupling-out region 20.

The material of the waveguide plate 10 is resin or glass. A diffractive microstructure is formed on a surface of the waveguide plate 10 that corresponds to the coupling-out region 20, so that the light in the interior of the waveguide plate 10 can diffract to outside and enter a user's eyes to form an image.

Preferably, as shown in FIGS. 1-3 and 7-8, the light-transmitting structure 40 can protect the waveguide plate 10 from damage. In particular, the light-transmitting structure 40 covers the coupling-out region 20 and can therefore protect the coupling-out region 20.

The light-transmitting structure 40 can be a structure that improves the propagation direction of light to enable observation of an object by the user's eyes. Light emerging from the coupling-out region 20 travels through the first dielectric layer 30a or the second dielectric layer 30b and transmits through the light-transmitting structure 40 to reach the user's eyes, and external natural light transmits in sequence through the light-transmitting structure 40, the second dielectric layer 30b, the waveguide plate 10, the first dielectric layer 30a, and the light-transmitting structure 40 to also reach the user's eyes. The light-transmitting structure 40 can improve both the emerging light from the coupling-out region 20 and the external natural light.

The light-transmitting structure 40 covers the coupling-out region 20, and an area of the light-transmitting structure 40 is greater than an area of the coupling-out region 20, and the emerging light from the coupling-out region 20 travels through the light-transmitting structure 40.

Preferably, as shown in FIGS. 1-3, the light-transmitting structure 40 can be a refractive structure or a blank structure; the refractive structure has a refractive power that is greater than or equal to a preset positive threshold value, or that is less than or equal to a preset negative threshold value, and the blank structure has a refractive power that is less than the preset positive threshold value and greater than the preset negative threshold value.

Specifically, the refractive structure refers to a structure that changes a propagation direction of a light beam, and a refractive state of an eye can be corrected by the refractive structure, where the refractive state of an eye includes at least one of myopia, hyperopia, and astigmatism. Thus, the refractive structure can be used to correct myopia, or can be used to correct hyperopia, or can be used to correct astigmatism. Of course, correction of myopia can be carried out simultaneously with correction of astigmatism, and correction of hyperopia can also be carried out simultaneously with correction of astigmatism. The blank structure refers to an optical blank structure to be processed, and the blank structure can be processed to form a refractive structure. The preset positive threshold value refers to a threshold value that is preset to be greater than zero, and the preset negative threshold value refers to a threshold value that is preset to be less than zero. The preset positive threshold value and the preset negative threshold value can be set as desired. For example, the preset positive threshold value can be set to be 0.5, and the preset negative threshold value is set to be -1.

Thus, the refractive power of the refractive structure is set to be in a range of (-∞, the preset negative threshold value] or [the preset positive threshold value, +∞), and the refractive power of the blank structure is set to be in a range of (the preset negative threshold value, the preset positive threshold value). It is noted that when the refractive power of the blank structure is zero, the blank structure is a planar structure, meaning two opposite surfaces of the blank structure are both a planar surface.

In the case where the refractive structure is adopted, the refractive power of the refractive structure is determined according the refractive state of the user's eyes. Usually, in the production of an optical combiner, instead of directly manufacturing a refractive structure having a desired refractive power, a blank structure is produced first, a parameter that is used to process the blank structure is then determined according to the refractive state of the user's eyes, and the blank structure is processed according to the parameter to form the refractive structure to be used by the user to correct the refractive state of the user's eyes. Processing for forming the refractive structure can be carried out with a mold assembly 70 corresponding to the refractive structure, in order to form an optical combiner having such a refractive structure. Or alternatively, a mold assembly 70 corresponding to the blank structure can be first used to form an optical combiner having the blank structure, and then, the blank structure is processed to form the refractive structure.

Preferably, the light-transmitting structure 40 comprises a first light-transmitting portion 41 and a second light-transmitting portion 42. The first light-transmitting portion 41 and the second light-transmitting portion 42 are respectively located on two opposite sides of the waveguide plate.

The first light-transmitting portion 41 is located on one side of the coupling-out region where light emerges, while the second light-transmitting portion 42 is located on one side of the coupling-out region that is opposite to the side where light emerges. Light emitting from the coupling-out region emerges out of the first light-transmitting portion 41 to reach the user's eyes. The external natural light transmits through the second light-transmitting portion 42 to get into the light-transmitting structure 40, and travels in sequence through the second dielectric layer 30b, the waveguide plate, and the first dielectric layer 30a, and emerges out of the first light-transmitting portion 41 to reach the user's eyes.

The first light-transmitting portion 41 may be arranged as the refractive structure or the blank structure, and the second light-transmitting portion 42 may also be arranged as the refractive structure or the blank structure.

The emerging light from the coupling-out region 20 travels through the first light-transmitting portion 41 to then reach the user's eyes, and in case the first light-transmitting portion 41 is arranged as the refractive structure, or alternatively, the blank structure of the first light-transmitting portion 41 is processed to form the refractive structure, the emerging light from the coupling-out region 20, after being corrected by the refractive structure, reaches the user's eyes, and the external natural light is also corrected by the refractive structure to then reach the user's eyes, so that the user whose eyes are in the refractive state may clearly see an image formed of the emerging light of the coupling-out region 20 and an image formed of the external natural light.

In case the second light-transmitting portion 42 is arranged as the refractive structure, or alternatively, the blank structure of the second light-transmitting portion 42 is processed to form the refractive structure, the external natural light, after being corrected by the refractive structure, gets into the waveguide structure 1 and eventually reaches the user's eyes, and the emerging light of the coupling-out region 20 is corrected by the refractive structure of the first light-transmitting portion 41 to then reach the user's eyes, and the external natural light transmits through the refractive structure of the second light-transmitting portion 42 and also transmits through the refractive structure of the first light-transmitting portion 41 to reach the user's eyes. In other words, the refractive power of the first light-transmitting portion 41 and the refractive power the second light-transmitting portion 42 can be adjusted as desired to fulfill better match between the image formed of the external natural light and the image formed of the light from the coupling-out region.

With the light-transmitting structure 40 being arranged as the refractive structure, a user suffering a refractive error can use the waveguide plate 10 without wearing eyeglasses. The optical combiner according to the present disclosure features reduced size and weight and enables adjustment of the external natural light and the light from inside of the waveguide plate 10 to allow a user to observe corresponding images.

The external natural light transmits, in sequence, through the second light-transmitting portion 42 and the first light-transmitting portion 41. Generally, light emerging from the coupling-out region 20 is parallel light, which is equivalent to light emitting from a point at infinity, and is regarded as parallel light when reaching the user's eyes due to the relatively far distance. The external natural light may not necessarily be parallel light, and as such, by adjusting the refractive power of the second light-transmitting portion 42, the natural light from a target location can be converted into parallel light, so that both of the emerging light from the coupling-out region 20 and the external natural light are parallel light, and the two will have the same angle of variation for the direction of light when subsequently transmitting through the first light-transmitting portion 41, making light emerging from the coupling-out region 20 equivalent to emitting from the target location. The emerging light from the coupling-out region 20 forms a virtual image, which can better match a real image formed by the external natural light, so that the user, when switching between observing the virtual image and observing the real image, does not need to excessively adjust the distance of observation for the eyes. The second light-transmitting portion 42 is located on the side of the waveguide plate 10 that is opposite to the eyes, namely being located on the side of the waveguide plate 10 that is opposite to where light emerges from the coupling-out region 20 toward the eyes. The second light-transmitting portion 42 fulfills effects of protection and aesthetics.

Preferably, as shown in FIGS. 1-3, the first light-transmitting portion 41 may include a convex light-transmitting portion, a concave light-transmitting portion, or a light-transmitting portion with uniform thickness.

Specifically, the convex light-transmitting portion refers to a light-transmitting structure having a refractive power greater than zero, and the convex light-transmitting portion fulfills an effect of converging light. The convex light-transmitting portion is a convex refractive portion or a convex blank portion depending on its value of the refractive power. The concave light-transmitting portion refers to a light-transmitting structure having a refractive power less than zero, which fulfills an effect of diverging light. The concave light-transmitting portion is a concave refractive portion or a concave blank portion depending on its value of the refractive power. The light-transmitting portion with uniform thickness refers to a light-transmitting structure having a refractive power of zero, and the light-transmitting portion with uniform thickness has a uniform thickness, where the light-transmitting portion with uniform thickness can be a planar light-transmitting portion, or alternatively can be a curved light-transmitting portion, provided that the thickness is uniform and consistent and the refractive power is zero.

Specifically, the refractive structure includes a convex refractive structure or a concave refractive structure. The convex refractive structure refers to a refractive structure having a refractive power greater than or equal to the preset positive threshold value. The concave refractive structure refers to a refractive structure having a refractive power less than or equal to the preset negative threshold value. The blank structure includes a convex blank structure or a concave blank structure. The convex blank structure refers to a blank structure having a refractive power greater than zero and less than the preset positive threshold value. The concave blank structure refers to a blank structure having a refractive power less than zero and greater than the preset negative threshold value. The blank structure may further include a straight blank structure having a refractive power of zero.

It is noted that the waveguide plate 10 may be arranged as a planar waveguide plate, or may alternatively be a curved waveguide plate. The planar waveguide plate refers to a waveguide plate having two opposite surfaces that are both planar. The curved waveguide plate refers to a waveguide plate having two opposite surfaces that are both curved. Generally, a surface of the curved waveguide plate that is on the side of human eyes is a concave surface, and a surface of the curved waveguide plate that is opposite to the side of human eyes is a convex surface. As such, the second light-transmitting portion 42 arranged as a convex light-transmitting portion can better match the convex surface of the curved waveguide plate, thus reducing an overall thickness of the optical combiner.

Preferably, as shown in FIGS. 1-8, the waveguide plate 10 further includes a coupling-in region 50.

Specifically, the light-transmitting structure 40 covers the coupling-out region 20 and extends to outside of the coupling-out region 20. The coupling-in region 50 is a region where a light beam is coupled into the waveguide plate 10. The coupling-in region 50 has a diffractive microstructure that can be arranged on the same side or two sides of the waveguide plate 10, and the coupling-out region 20 has a diffractive microstructure that can be arranged on the same side or two sides of the waveguide plate 10. Specifically, a surface of the waveguide plate 10 that corresponds to the coupling-in region 50 is formed with a diffractive microstructure, such as at least one of a one-dimensional grating, a two-dimensional grating, a volume holographic grating, and a metasurface. A surface of the waveguide plate 10 that corresponds to the coupling-out region 20 is also formed with a diffractive microstructure, such as at least one of a one-dimensional grating, a two-dimensional grating, a volume holographic grating, and a metasurface. In case the coupling-in region 50 and the coupling-out region 20 are located on the same side of the waveguide plate 10, the diffractive microstructure of the coupling-in region 50 and the diffractive microstructure of the coupling-out region 20 can be arranged separate from each other or proximate to each other.

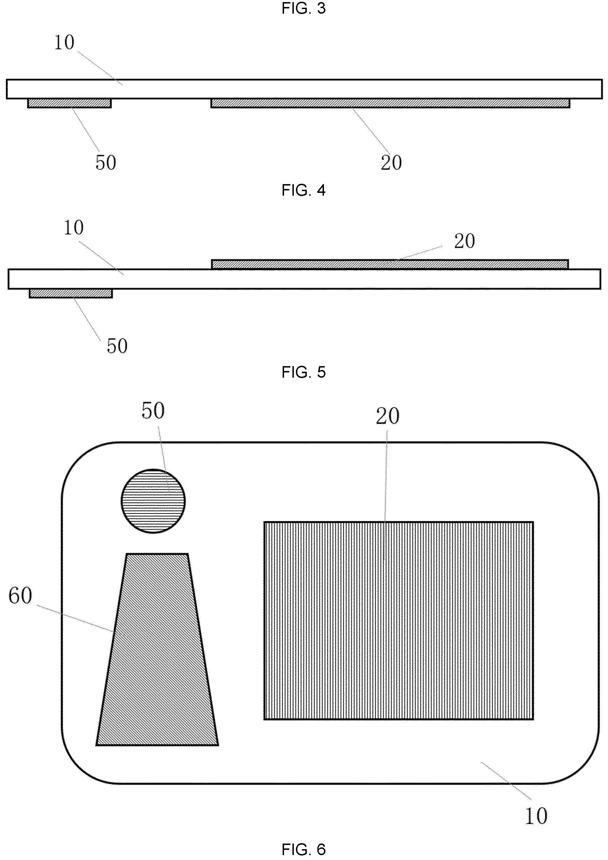

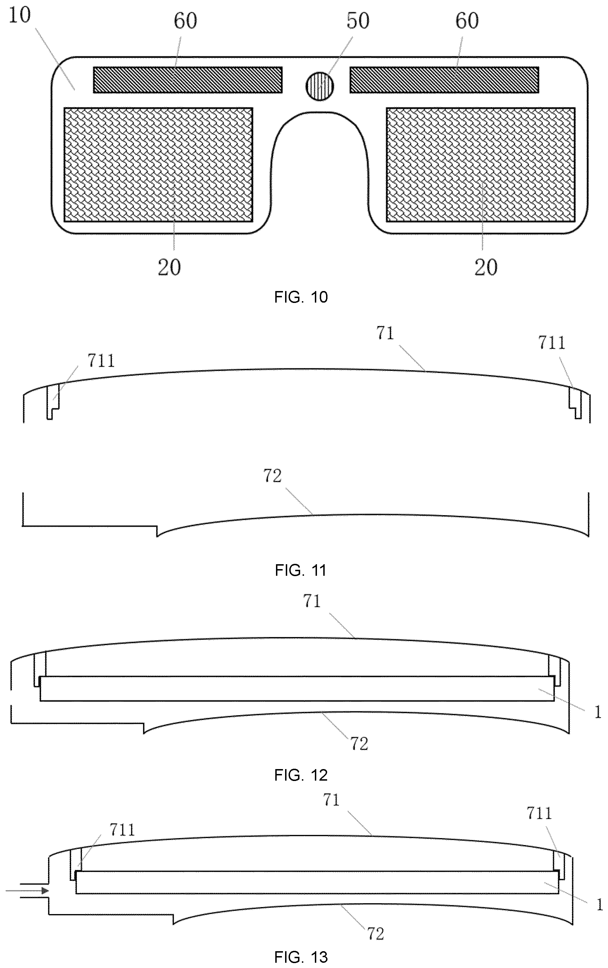

Preferably, as shown in FIGS. 6 and 10, the waveguide plate 10 further includes one or more deflecting regions 60.

Light incident to the coupling-in region 50, after transmitting through the deflecting region 60, propagates to the coupling-out region 20, and the number of the deflecting regions is greater than or equal to the number of the coupling-out regions.

Specifically, the deflecting region 60 can be arranged on any one of the sides of the waveguide plate 10. The coupling-in region 50 is located at an upper left corner of the coupling-out region 20, while the deflecting region 60 is located on a left side or an upper side of the coupling-out region 20. A surface of the waveguide plate 10 that corresponds to the deflecting region 60 is formed with a diffractive microstructure, such as a one-dimensional grating, a two-dimensional grating, a volume holographic grating, or a metasurface, and the diffractive microstructure can be arranged on any side of the waveguide plate 10. The coupling-in region, the deflecting region, and the coupling-out region can be arranged on the same surface of the waveguide plate, or can alternatively be arranged on different surfaces of the waveguide plate; in case of being arranged on the same surface, the coupling-in region, the deflecting region, and the coupling-out region can be separated from each other or can be proximate to each other.

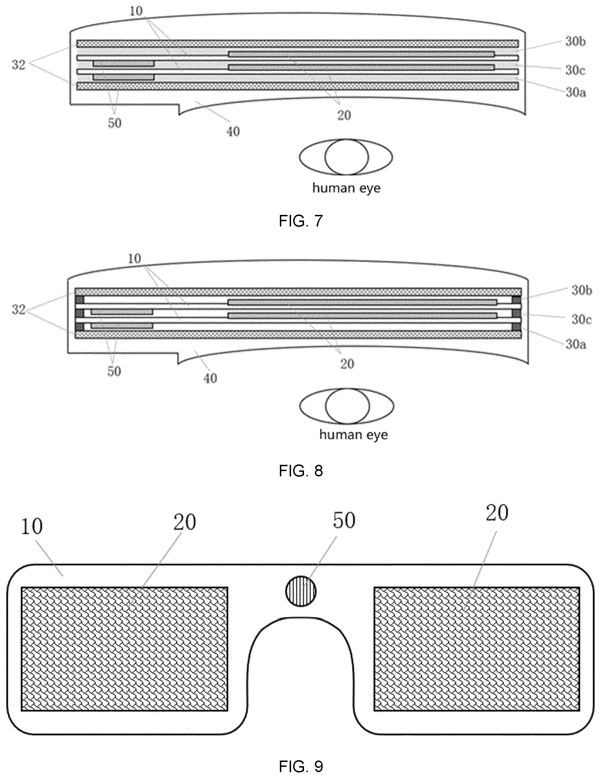

Preferably, as shown in FIGS. 9-10, two such coupling-out regions 20 are provided, and the two coupling-out regions 20 are respectively located at two sides of the coupling-in region 50. In the embodiment of FIGS. 9, the two coupling-out regions 20 are respectively located at left and right sides of the coupling-in region 50.

Specifically, the two coupling-out regions 20 respectively correspond to the two eyes of the user, and the two eyes of the user may both observe the emerging light from the coupling-out regions 20. The two coupling-out regions 20 may share a common coupling-in region 50, and the coupling-in region 50 is arranged between the two coupling-out regions 20.

When two coupling-out regions 20 are adopted, the light-transmitting structure 40 may enclose both coupling-out regions 20, and certainly, two light-transmitting structures 40 can be adopted, which will be respectively referred to as a left light-transmitting structure and a right light-transmitting structure respectively corresponding to the two coupling-out regions 20 to fulfill enclosure of the corresponding ones of the coupling-out regions 20 and also respectively corresponding to the left eye and the right eye of the user. In case the left light-transmitting structure and the right light-transmitting structure are both arranged as a refractive structure, the refractive power of the left light-transmitting structure and the refractive power of the right light-transmitting structure can be set according to the user's eyes, and can be identical or different.

As there are two coupling-out regions 20, two deflecting regions 60 can be arranged, and the deflecting regions 60 are arranged to correspond to the coupling-out regions 20.

Preferably, as shown in FIGS. 1-3 and 18-19, to prevent the light-transmitting structure 40 from influencing the light that is incident to the coupling-in region 50 with respect to the propagation direction thereof in transmitting through the light-transmitting structure 40, a straight portion is formed on the light-transmitting structure 40 at a location corresponding to the coupling-in region 50, and the refractive power of the straight portion is zero. As such, during light incident to the coupling-in region 50 transmitting through the light-transmitting structure 40, the incident light before transmitting through the light-transmitting structure 40 and the incident light that has transmitted through the light-transmitting structure 40 are parallel or collinear. The light of the coupling-in region can be incident through the first light-transmitting portion 41, or can be incident through the second light-transmitting portion 42. In case the light of the coupling-in region is incident through the first light-transmitting portion 41, the straight portion is arranged on the first light-transmitting portion 41, and in case the light of the coupling-in region is incident through the second light-transmitting portion 42, the straight portion is arranged on the second light-transmitting portion 42.

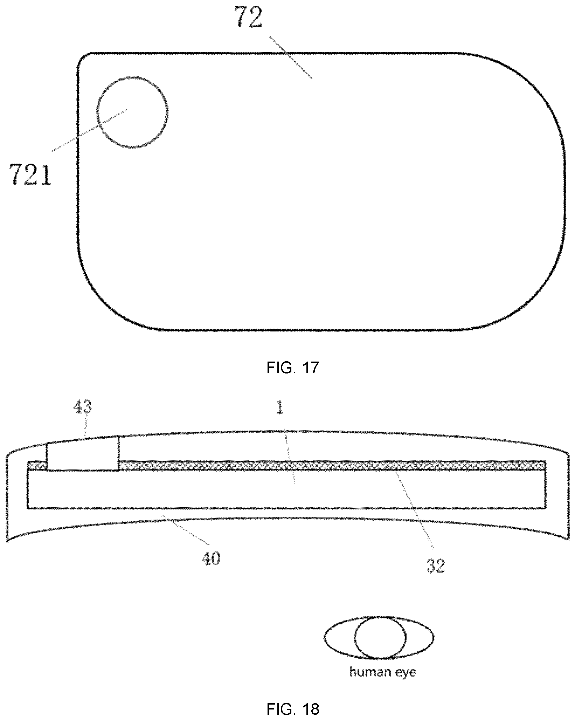

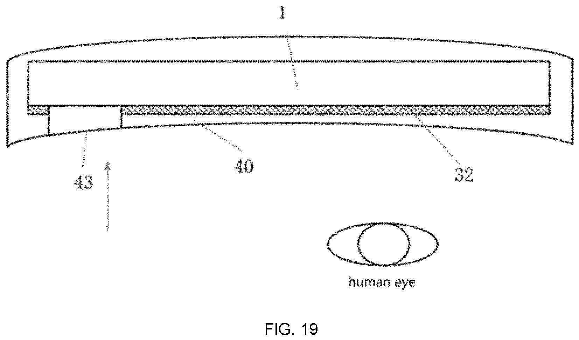

Preferably, as shown in FIGS. 18 and 19, the straight portion comprises a through hole 43.

Specifically, the through hole 43 is formed in the light-transmitting structure 40 at a location corresponding to the coupling-in region 50, and light incident to the coupling-in region 50 passes through the through hole 43 to reach the coupling-in region 50, and the light-transmitting structure 40 does not change the propagation direction of the light incident to the coupling-in region 50.

Preferably, the light that is incident to the coupling-in region 50 in the same direction transmits in the waveguide to the coupling-out region 20, and the light emerging from the coupling-out region 20 is all of the same direction.

Specifically, the light that is incident to the coupling-in region 50 in the same direction transmits in the waveguide to the coupling-out region 20, and light emerging from the coupling-out region 20 can have multiple beams, and each beam of the emerging light is in the same direction. The refractive structure is located at one side of the coupling-out region 20 where light emerges toward the human eyes, and each beam of the emerging light of the coupling-out region 20 is in the same direction, but the propagation direction of the emerging light changes after transmitting through the refractive structure, so that the refractive state of the user's eyes can be corrected after the emerging light reaches the user's eyes.

Preferably, as shown in FIGS. 1-3 and 7-8, the first dielectric layer 30a or the second dielectric layer 30b comprises an adhesive layer 31, and the adhesive layer 31 is connected to the waveguide plate 10. A refractive index of the adhesive layer 31 is less than the refractive index of the waveguide plate 10.

Specifically, the adhesive layer 31 is used to connect the waveguide plate 10 and the light-transmitting structure 40, and the adhesive layer 31 is directly connected to the waveguide plate 10. Since the refractive index of the adhesive layer 31 is less than the refractive index of the waveguide plate 10, light propagating in the waveguide plate 10 undergoes total internal reflection without propagating into the adhesive layer 31, and thus no light leaking occurs. Another functional layer, such as a protective layer 32, may be arranged between the first dielectric layer 30a (or the second dielectric layer 30b) and the light-transmitting structure 40. The adhesive layer 31 is directly connected to the waveguide layer, and said another functional layer is connected to the first dielectric layer 30a (or the second dielectric layer 30b). The refractive index of said another functional layer can be set as desired.

Preferably, as shown in FIGS. 1-3, 7, and 8, the first dielectric layer 30a or the second dielectric layer 30b further comprises a protective layer 32, which is arranged at one side of the adhesive layer 31 that is opposite to the waveguide plate.

The first dielectric layer 30a, the second dielectric layer 30b, and the protective layer 32 are all transparent. The protective layer 32 can be a glass protective layer or a resin protective layer. The protective layer 32 may be made of the same material as the light-transmitting structure 40. For example, when the light-transmitting structure 40 is made of a resin material, the protective layer 32 may also be made of a resin material. The protective layer 32 protects the adhesive layer 31 and the waveguide plate, and during a process of molding, the light-transmitting structure 40 may be fabricated by injection molding, and the protective layer 32 protects the adhesive layer 31 from being damaged or falling off during the process of injection.

Preferably, the adhesive layer 31 is laid to completely cover the protective layer 32.

Specifically, to enhance the connection strength between the waveguide plate 10 and the protective layer 32, the adhesive layer 31 is laid to completely cover the protective layer 32, so that the protective layer 32 may be fully connected to the waveguide plate 10 through the adhesive layer 31. And, the waveguide plate 10, the protective layer 32, and the light-transmitting structure 40 can be connected securely in one piece.

Preferably, as shown in FIGS. 2, 3, and 8, the adhesive layer 31 comprises a connecting portion 311 having two sides respectively connected to the waveguide plate 10 and the protective layer 32, and an air section 312 located between the waveguide plate 10 and the protective layer 32.

Specifically, to reduce a difference of expansion between the waveguide plate 10 and the protective layer 32 due to different coefficients of expansion, it is possible that the adhesive layer 31 is not laid to completely cover the protective layer 32, and the connecting portion 311 connects the waveguide plate 10 and the protective layer 32. As the refractive index of the connecting portion 311 and the refractive index of the gas in the air section 312 are both less than the refractive index of the waveguide plate 10, no light leaking of the waveguide plate 10 will occur. The gas in the air section 312 can be selected as desired. For example, the air section 312 can be filled with air or other gases, such as a gas with color. The air section 312 can also be provided therein with another functional member or decorative member.

Due to the presence of the air section 312, the protective layer 32 is not in contact with the diffractive microstructure of the coupling-out region 20, and therefore the diffractive microstructure will not be damaged by the protective layer 32. In case the adhesive layer 31 is laid to completely cover the waveguide plate, the protective layer 32 can be omitted. As there are two types of structure of the adhesive layer 31, the first dielectric layer 30a and the second dielectric layer 30b may use the same structure or may use different structures.

Preferably, as shown in FIGS. 7-8, the waveguide plate 10 includes at least two layers, and the at least two layers of the waveguide plate 10 are stacked in sequence.

Specifically, one or more layers of the waveguide plate 10 may be provided. In case at least two layers of the waveguide plate 10 are provided, the at least two layers of the waveguide plate 10 are stacked in sequence, and each adjacent waveguide plate 10 can be connected by means of a third dielectric layer 30c therebetween. The third dielectric layer 30c includes an adhesive layer 31, and the adhesive layer 31 is laid to completely cover the waveguide plate for adhesive bonding. The adhesive layer 31 comprises a connecting portion 311 and an air section 312. The present disclosure does not set any constraint to the specific way of connection among the multiple layers of the waveguide plate. Each layer of waveguide plate 10 can be provided with the coupling-in region 50, the coupling-out region 20, and the deflecting region 60. The coupling-in region 50 of one waveguide plate corresponds to the coupling-in region 50 of one adjacent waveguide plate, and the coupling-out region 20 of one waveguide plate corresponds to the coupling-out region 20 of one adjacent waveguide plate.

In the case where multiple layers of waveguide plate are arranged, the first dielectric layer 30a and the second dielectric layer 30b are respectively arranged on the outermost waveguide plate. There can be one or two protective layers 32, the protective layer 32 is connected to the first dielectric layer 30a, and can also be connected to the second dielectric layer 30b.

On the basis of the optical combiner according to any of the previous embodiments, the present disclosure further provides a preferred embodiment of a display device.

The display device according to the embodiment of the present disclosure includes the optical combiner according to any one of the previously described embodiments.

The waveguide plate further comprises a coupling-in region, and the display device further comprises an optical machine. The optical machine emits light, which enters the waveguide plate through the coupling-in region and emerges from the coupling-out region.

As shown in FIGS. 11-17, on the basis of the optical combiner according to any of the previous embodiments, the present disclosure further provides a preferred embodiment of a method for manufacturing the optical combiner.

A method for manufacturing the optical combiner according to the embodiment of the present disclosure comprises:
S100, providing a mold assembly and a waveguide structure.

As shown in FIGS. 11-17, the mold assembly 70 comprises a first mold member 71 and a second mold member 72. The first mold member 71 and the second mold member 72 are connected to form a receiving space. The first mold member 71 and/or the second mold member 72 is provided with a supporting structure 711, and the supporting structure 711 is configured for placement of the waveguide structure thereon. The waveguide structure comprises a first dielectric layer, a waveguide plate, and a second dielectric layer that are arranged in sequence. The waveguide plate comprises a coupling-out region. Each of a refractive index of the first dielectric layer and a refractive index of the second dielectric layer is less than a refractive index of the waveguide plate.

Specifically, the mold assembly 70 can be made by means of operations of injection, cutting, and grinding, and the mold assembly 70 can be made of a material such as glass, resin, or metal. It is noted that in case the mold assembly 70 is made of resin or glass, after the molding of the light-transmitting structure, demolding may or may not be carried out, and if demolding is not carried out, then the mold assembly 70 may serve as part of the light-transmitting structure. When the mold assembly 70 comprises another non-transparent material, demolding is performed. That is, if the mold assembly is made of a resin or glass material, the molding assembly can be kept with the light-transmitting structure or removed after the light-transmitting structure is formed; if the mold assembly is made of another non-transparent material, the molding assembly is removed after the light-transmitting structure is formed.

The first mold member 71 and the second mold member 72 are combined to form a complete mold assembly 70, the mold assembly 70 forms therein the receiving space, and a light-transmitting material can be injected into the receiving space to form the light-transmitting structure.

The waveguide structure can be obtained through micro-nano processing (such as nano imprint lithography, laser direct writing, electron beam lithography, projection exposure, dual beam interference exposure, wet etching, dry etching, and thin film deposition, and combinations of such processes), and processes of laminating, cutting, and inking.

S200, placing the waveguide structure on the supporting structure in the receiving space.

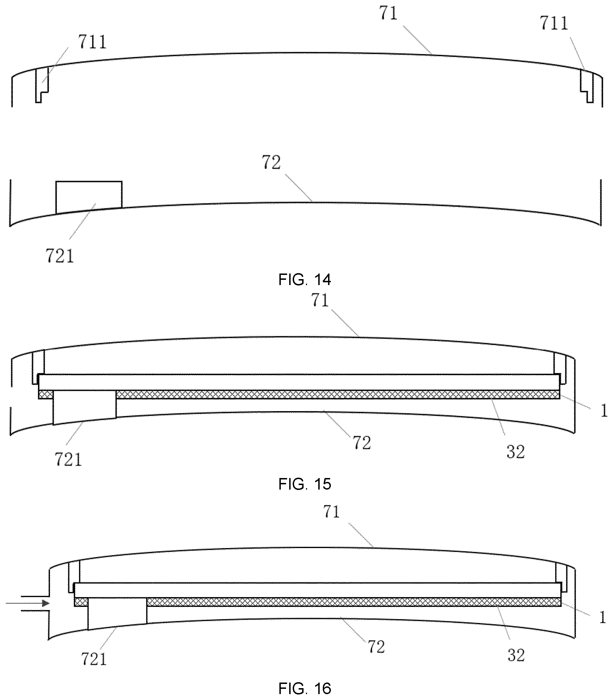

Specifically, the waveguide structure is placed on the supporting structure 711 of the first mold member 71, and then, the first mold member 71 and the second mold member 72 are connected together. As shown in FIGS. 14-17, if the straight portion formed on the light-transmitting structure at a location corresponding to the coupling-in region is a through hole, then the second mold member 72 is provided with a protruding portion 721, so that the waveguide structure can be securely clamped by the supporting structure 711 and the protruding portion 721 to better fix the waveguide structure. It is noted that if the first dielectric layer is provided with the protective layer, then the protective layer is formed with a through-hole structure at a location corresponding to the coupling-in region, and the through-hole structure of the protective layer is in communication with the through hole of the light-transmitting structure, and light emitting from the optical machine is allowed to directly transmit through the coupling-in region to enter the waveguide plate. During the process of molding, the protruding portion 721 of the second mold member 72 is inserted into the through-hole structure, so as to form the through hole in the light-transmitting structure. Further, the protruding portion 721 can better fix the waveguide structure, and ensure the position where the waveguide structure is placed on the supporting structure 711 is correct.

S300, injecting a light-transmitting material into the receiving space in order to form a light-transmitting structure to then obtain an optical combiner.

Specifically, the mold assembly 70 is formed with an injection hole, and the light-transmitting material is injected from the injection hole into the receiving space. The light-transmitting material can be of a thermosetting type, or can be of a thermoplastic type. For example, the light-transmitting material can be a liquid material, which is injected into the receiving space and is then heated to get set and cured so as to form the light-transmitting structure. Or, the light-transmitting material can be a solid material, which is melted through heating into a liquid material and is injected into the receiving space and subsequently cools down and becomes cured to form the light-transmitting structure. That is, if the light-transmitting material is of a thermosetting type, the step S300 comprises injecting the liquid light-transmitting material in a liquid state into the receiving space and heating the light-transmitting material to get cured so as to form the light-transmitting structure; if the light-transmitting material is of a thermoplastic type, the step S300 comprises injecting a liquid material into the receiving space and cooling the liquid material to get cured to form the light-transmitting structure, the liquid material being made by heating and melting the light transmitting material.

It will be appreciated that applications of the present disclosure are not limited to the examples provided above. Those having ordinary skill in the art may make modifications or alterations according to the above description, and all such modifications and alterations are considered belonging to the scope of protection that the claims of the present disclosure are pursuing.

## Claims

1. An optical combiner, comprising:
a light-transmitting structure(40); and
a waveguide structure(1) arranged in an interior of the light-transmitting structure(40), the waveguide structure(1) comprising a first dielectric layer(30a), a waveguide plate(10), and a second dielectric layer(30b) that are arranged in sequence, the waveguide plate(10) comprising one or more coupling-out regions(20);
wherein each of a refractive index of the first dielectric layer(30a) and a refractive index of the second dielectric layer(30b) is less than a refractive index of the waveguide plate(10).

2. The optical combiner according to claim 1, wherein the light-transmitting structure comprises a refractive structure or a blank structure; a refractive power of the refractive structure is greater than or equal to a preset positive threshold value, or is less than or equal to a preset negative threshold value, and a refractive power of the blank structure is less than the preset positive threshold value and greater than the preset negative threshold value.

3. The optical combiner according to claim 2, wherein the waveguide plate(10) comprises one or more coupling-in regions(50).

4. The optical combiner according to claim 3, wherein the waveguide plate(10) comprises one or more deflecting regions(60);
wherein light incident to the coupling-in region(50) transmits through the deflecting region(60) to propagate to the coupling-out region(50), the number of the deflecting regions(60) being equal to or greater than the number of the coupling-out regions(20); and/or
wherein light incident to the coupling-in region(50) in the same direction transmits in the waveguide to the coupling-out region(20), and light emerging from the coupling-out region(20) is in the same direction; and/or
wherein the one or more coupling-out regions(20) comprise two coupling-out regions(20), and the two coupling-out regions(20) are respectively located at two sides of the coupling-in region(50).

5. The optical combiner according to claim 3, wherein the light-transmitting structure(40) comprises a first light-transmitting portion(41) and a second light-transmitting portion(42), the first light-transmitting portion(41) and the second light-transmitting portion(42) being respectively located at two opposite sides of the waveguide plate(10);
wherein the first light-transmitting portion(41) or the second light-transmitting portion(42) is provided with a straight portion, and the straight portion is set at a location corresponding to the coupling-in region(50), the straight portion having a refractive power that is zero.

6. The optical combiner according to claim 5, wherein the first light-transmitting portion(41) includes a convex light-transmitting portion, a concave light-transmitting portion, or a light-transmitting portion with uniform thickness; and/or
wherein the second light-transmitting portion(42) includes a convex light-transmitting portion, a concave light-transmitting portion, or a light-transmitting portion with uniform thickness.

7. The optical combiner according to claim 1, wherein the waveguide plate(10) is a planar waveguide plate or a curved waveguide plate; and/or
wherein the waveguide plate(10) comprises at least two waveguide layers stacked sequentially, a third dielectric layer(30c) being arranged between each adjacent waveguide layers; and/or
wherein the first dielectric layer(30a) or the second dielectric layer(30b) comprises an adhesive layer(31) connected to the waveguide plate(10), a refractive index of the adhesive layer(31) being less than the refractive index of the waveguide plate(10).

8. The optical combiner according to claim 7, wherein the first dielectric layer(41) or the second dielectric layer(42) further comprises a protective layer(32) arranged on one side of the adhesive layer(31) that is opposite to the waveguide plate(10);
wherein the adhesive layer(31) is laid to completely cover the protective layer(32); or
the adhesive layer(31) comprises:
a connecting portion(311) having two sides that are respectively connected to the waveguide plate(10) and the protective layer(32); and
an air section(312) located between the waveguide plate(10) and the protective layer(32).

9. A display device, comprising the optical combiner according to claim 1.

10. A method for manufacturing the optical combiner according to claim 1, comprising:
providing a mold assembly(70) and a waveguide structure(1), wherein the mold assembly(70) comprises a first mold member(71) and a second mold member(72), the first mold member(71) and the second mold member(72) being connected to form a receiving space, the first mold member(71) and/or the second mold member(72) being provided with a supporting structure(711), the supporting structure(711) configured for placement of the waveguide structure(1) thereon; and the waveguide structure(1) comprises a first dielectric layer(30a), a waveguide plate(10), and a second dielectric layer(30b) that are arranged in sequence; the waveguide plate(10) comprises a coupling-out region(20); each of a refractive index of the first dielectric layer(30a) and a refractive index of the second dielectric layer(30b) being less than a refractive index of the waveguide plate(10);
placing the waveguide structure(1) on the supporting structure(711) in the receiving space; and
injecting a light-transmitting material into the receiving space in order to form the light-transmitting structure(40) to then obtain the optical combiner.
